# EUROPÄISCHE PATENTANMELDUNG

(11) **EP 2 626 182 A2**
(43) Veröffentlichungstag der Anmeldung: **14.08.2013**
(21) Anmeldenummer: 12192341.1
(22) Anmeldetag: 13.11.2012
(51) Int. Cl.: B29C 31/08

(54) **Vorrichtung zum Greifen eines flächigen Halbzeuges, sowie Transportvorrichtung und Transportverfahren zur Ablage und Lagefixierung von flächigen Halbzeugen**

(30) Priorität: 05.12.2011 DE 102011056033
(71) Anmelder: REHAU AG + Co, 95111 Rehau (DE)
(72) Erfinder: Kind, Franz-Georg, 95176 Konradsreuth (DE); Laukant, Holger, 95032 Hof (DE)

(57) **Zusammenfassung**

Die vorliegende Erfindung betrifft eine Vorrichtung zum Greifen eines flächigen Halbzeuges (1), vorzugsweise einer Fasermatte, mit einer Greifeinheit (5), wobei die Greifeinheit eine Saugglocke (11) mit einem umlaufenden Rand (12) aufweist, welche über mindestens eine Druckleitung (13) mittels Anlegen eines Unter- oder eines Überdrucks in einen Ansaugzustand oder einen Abstoßungszustand bringbar ist und wobei der umlaufende Rand im Ansaugzustand einen Teilbereich des flächigen Halbzeuges einschließt. Ferner Teil der Erfindung ist eine Transportvorrichtung (3) mit einer erfindungsgemäßen Vorrichtung, sowie eine Transportverfahren mit einer erfindungsgemäßen Transportvorrichtung.

## Beschreibung

Die vorliegende Erfindung betrifft eine Vorrichtung zum Greifen eines flächigen Halbzeuges, vorzugsweise einer Fasermatte, mit einer Greifeinheit, wobei die Greifeinheit eine Saugglocke mit einem umlaufenden Rand aufweist, welche über mindestens eine Druckleitung mittels Anlegen eines Unter- oder eines Überdrucks in einen Ansaugzustand oder einen Abstoßungszustand bringbar ist und wobei der umlaufende Rand im Ansaugzustand einen Teilbereich des flächigen Halbzeuges einschließt. Ferner Teil der Erfindung ist eine Transportvorrichtung mit einer erfindungsgemäßen Vorrichtung, sowie eine Transportverfahren mit einer erfindungsgemäßen Transportvorrichtung.

Aus dem Stand der Technik ist eine gattungsgemäße Vorrichtung bekannt. Die Schrift US 4,571,320 A offenbart eine Vorrichtung zum Greifen eines flächigen Halbzeuges in Form eines so genannten SMC (Sheet Moulding Composite). Die als Saugglocke ausgebildete Greifeinheit fungiert hierbei allein zum Transport des flächigen Halbzeuges, welches über eine Werkzeughälfte geführt und dort abgelegt wird. Die Ablage des flächigen Halbzeuges erfolgt durch ein Abschalten des Vakuums bzw. des Unterdruckes, welcher zu einem Abstoßungszustand der Vorrichtung führt. Nachteilig an dieser aus dem Stand der Technik bekannten Vorrichtung zum Greifen eines flächigen Halbzeuges ist, dass diese lediglich einen Transport des flächigen Halbzeuges ermöglicht.

Die DE 10 2010 013 131 A beschreibt ein Legeverfahren für flächige Halbzeuge, wobei die flächigen Halbzeuge mittels eines ersten Robotersystems auf einem Werkstückträger zu einem aus mehreren flächigen Halbzeugen gebildeten Vorformling aufgebaut werden. Eine Lagefixierung der flächigen Halbzeuge zueinander wird z.B. mittels eines Laserschweißverfahrens von einem zweiten Robotersystem übernommen. Aufgrund des Vorsehens von unabhängig agierenden Robotersystemen zum Ablegen und zum Lagefixieren der flächigen Halbzeuge zueinander ergeben sich vergleichsweise hohe Anlage- und Fertigungskosten.

Die Erfindung stellt sich daher die Aufgabe, eine Vorrichtung zum Greifen eines flächigen Halbzeuges, eine Transportvorrichtung und ein Transportverfahren anzugeben, welche einen effizienten Transport von flächigen Halbzeugen bei reduzierten Anlage- und Fertigungskosten ermöglichen.

Die erfindungsgemäße Aufgabe wird gelöst durch eine Vorrichtung zum Greifen eines flächigen Halbzeuges mit den Merkmalen des Anspruchs 1, einer Transportvorrichtung mit den Merkmalen des Anspruchs 9 und einem Transportverfahren mit den Merkmalen des Anspruchs 10.

Die erfindungsgemäße Vorrichtung zum Greifen eines flächigen Halbzeuges, vorzugsweise einer Fasermatte, weist eine Greifeinheit auf, wobei die Greifeinheit eine Saugglocke mit einem umlaufenden Rand aufweist, welche über mindestens eine Druckleitung mittels Anlegen eines Unter- oder eines Überdrucks in einen Ansaugzustand oder einen Ausstoßungszustand bringbar ist. Der umlaufende Rand der Saugglocke schließt im Ansaugzustand einen Teilbereich des flächigen Halbzeuges ein. Erfindungsgemäß ist vorgesehen, dass mindestens eine Einrichtung mit einer Quelle einer hochenergetischen Strahlung vorgesehen ist, wobei diese Einrichtung derart angeordnet ist, dass die Strahlung innerhalb des umlaufenden Randes auf den Teilbereich des flächigen Halbzeuges übertragbar ist. Die erfindungsgemäße Vorrichtung erlaubt es, zum einen ein flächiges Halbzeug, insbesondere eine Fasermatte, anzusaugen und für einen Transport und ein Ablegen zu übernehmen und gleichzeitig am Ablagepunkt mittels der Übertragung einer hochenergetischen Strahlung auf den von dem umlaufenden Rand der Saugglocke eingeschlossenen Teilbereich des flächigen Halbzeuges eine Fügeverbindung zu einem unterhalb des flächigen Halbzeuges befindlichen Objekts zu ermöglichen. Das vorgenannte Objekt kann hierbei insbesondere ein weiteres flächiges Halbzeug, vorzugsweise eine weitere Fasermatte sein. In vorteilhafter Weise lassen sich somit die Verfahrensschritte Transport und Ablage des flächigen Halbzeuges und die Lagefixierung des flächigen Halbzeuges mit einer einzigen erfindungsgemäßen Vorrichtung durchführen, sodass entsprechende Fertigungsanlagen kompakt dimensioniert und kostengünstig betreibbar sind. Anlegen eines Überdruckes meint im Rahmen der Erfindung im Übrigen auch, dass lediglich der Unterdruck abgeschaltet wird und sich infolgedessen ein Normalluftdruck innerhalb des von der Saugglocke und dem flächigen Halbzeug eingeschlossenen Saugglockenraums einstellt.

Vorzugsweise ist die hochenergetische Strahlung über oder durch die Druckleitung oder mittels der Druckleitung übertragbar. In der Regel handelt es sich bei der Druckleitung um einen länglichen Hohlraum, über oder durch oder mittels welchen beispielsweise ein Laserstrahl in einfacher Weise auf den Teilbereich des flächigen Halbzeugs übertragbar ist. Weiterhin denkbar ist die Ausbildung einer so genannten Koaxialleitung, in welcher innenliegend eine z.B. Glasfaserleitung zur Übertragung eines Laserstrahls angeordnet ist. Mittels der die Glasfaserleitung umgebenden Druckleitung kann das Anlegen eines Unter- oder eines Überdrucks ermöglicht sein.

Bei Einsatz einer Fasermatte als flächigem Halbzeug kann die Faserverstärkung der Fasermatte bereichsweise oder vollständig aus Endlosfasern bestehen, welche unidirektional ausgerichtet oder als Gewebe ausgebildet sein können. Die Fasermatte kann eine Matrix aus einem thermoplastischen Kunststoffmaterial oder aus einem duroplastischen Kunststoffmaterial umfassen. Die Faserverstärkung der Fasermatte kann durch Glasfasern, Carbonfasern, Aramidfasern, Basaltfasern, Mineralfasern, Fasern aus nachwachsenden Rohstoffen, Metallfasern und/oder durch Polymerfasern gebildet sein. Das thermoplastische Kunststoffmaterial kann Polyamid (PA), insbesondere Polyamid 6 und Polyamid 6.6, Polypropylen (PP), Polyethylen (PE), POM (Polyoxymethylen), Polyphenylensulfid (PPS), Polyethersulfon (PES), Polyetheretherketon (PEEK), Polyetherimid (PEI), Polyethylenterephthalat (PET), vergleichbare Technische- oder Hochtemperatur-Kunststoffmaterialien oder Kombinationen der vorgenannten Kunststoffmaterialien umfassen. Ein duroplastisches Kunststoffmaterial kann Aminoplaste, Phenoplaste, Epoxidharze, vernetzte Polyacrylate, Polyurethane und weitere vernetzbare Polymere umfassen.

Die mindestens eine Einrichtung mit der Quelle der hochenergetischen Strahlung kann einen Laserstrahler und/oder einen Plasmastrahler und/oder einen Elektronenstrahler umfassen. Die Einrichtung kann hierbei in unmittelbarer Nähe der Saugglocke bzw. der Greifeinheit angeordnet sein, kann jedoch auch mittels mindestens eines Strahlungsleiters der Einrichtung zu der Saugglocke geführt sein.

Die Saugglocke kann steif und unnachgiebig ausgebildet sein, sodass über die Saugglocke eine Druckkraft auf das flächige Halbzeug übertragbar ist. Vorteilhaft lässt sich ein Spalt zwischen den flächigen Halbzeugen minimieren.

Alternativ kann die Saugglocke elastisch und nachgiebig ausgebildet sein. Die Saugglocke kann hierbei insbesondere als Balgsaugglocke ausgebildet sein. Mittels einer elastischen und nachgiebigen Saugglocke können Unebenheiten des Werkstückträgers ausgeglichen werden.

Im Bereich der Saugglocke kann ein mit der Einrichtung in Signalverbindung stehender Drucksensor vorgesehen sein, dessen Sensorsignal zur Freigabe der hochenergetischen Strahlung nutzbar ist. Mittels des Drucksensors kann das Aufliegen des umlaufenden Randes der Saugglocke detektiert werden und die hochenergetische Strahlung erst dann freigegeben werden, wenn sichergestellt ist, dass dieses Aufliegen tatsächlich vorliegt. Die entsprechende Verarbeitung des Sensorsignals erfolgt über eine dem Fachmann bekannte Regel- und/oder Steuereinheit. Der Drucksensor kann hierbei den Druck innerhalb des Saugglockenraums (entspricht dem von der Saugglocke und dem flächigen Halbzeug eingeschlossene Raum) und/oder eine Druckkraft auf die Saugglocke ermitteln. Im Falle einer Druckermittlung im Saugglockenraum ermöglicht ein ermittelter und vorab definierter Mindestdruckwert unterhalb des Atmosphärendrucks die Bestimmung, dass die Saugglocke sich fest auf dem flächigen Halbzeug befindet. Entsprechendes gilt für eine vorab definierte Druckkraft.

Die dem Teilbereich zugewandte Oberfläche der Saugglocke kann aus einem die hochenergetische Strahlung weitgehend reflektierenden Material gebildet sein. Die dem Teilbereich zugewandte Oberfläche der Saugglocke kann mit einem die hochenergetische Strahlung weitgehend reflektierenden Material beschichtet sein. Als reflektierende Materialien haben sich besonders Aluminiumbasis- oder Eisenbasis- oder Kupferbasis-Materialien erwiesen.

Das flächige Halbzeug und/oder das weitere flächige Halbzeug kann ein Metallblech oder ein Halbzeug aus einem Kunststoffmaterial sein. Das Halbzeug aus einem Kunststoffmaterial kann insbesondere eine in eine Kunststoffmatrix eingebettete Faserverstärkung aufweisen. Die Faserverstärkung kann bereichsweise oder vollständig aus Endlosfasern bestehen, welche unidirektional ausgerichtet oder als Gewebe ausgebildet sein können. Die Kunststoffmatrix kann eine Matrix aus einem thermoplastischen Kunststoffmaterial oder aus einem duroplastischen Kunststoffmaterial umfassen. Die Faserverstärkung kann durch Glasfasern, Carbonfasern, Aramidfasern, Basaltfasern, Mineralfasern, Fasern aus nachwachsenden Rohstoffen, Metallfasern und/oder durch Polymerfasern gebildet sein.

Das thermoplastische Kunststoffmaterial kann Polyamid (PA), insbesondere Polyamid 6 und Polyamid 6.6, Polypropylen (PP), Polyethylen (PE), POM (Polyoxymethylen), Polyphenylensulfid (PPS), Polyethersulfon (PES), Polyetheretherketon (PEEK), Polyetherimid (PEI), Polyethylenterephthalat (PET), vergleichbare Technische- oder Hochtemperatur-Kunststoffmaterialien oder Kombinationen der vorgenannten Kunststoffmaterialien umfassen. Ein duroplastisches Kunststoffmaterial kann Aminoplaste, Phenoplaste, Epoxidharze, vernetzte Polyacrylate, Polyurethane und weitere vernetzbare Polymere umfassen.

Weiterhin Teil der Erfindung ist ein Transportverfahren zur Ablage und Lagefixierung von flächigen Halbzeugen unter Verwendung einer Transportvorrichtung, wobei die Transportvorrichtung mindestens eine erfindungsgemäße Vorrichtung zum Greifen eines flächigen Halbzeuges, insbesondere eine Vorrichtung nach einem der Ansprüche 1 bis 8, und mindestens eine mit der Greifeinheit der erfindungsgemäßen Vorrichtung verbundene räumlich bewegbare Handhabungseinheit aufweist, wobei das Transportverfahren die folgenden Schritte umfasst:
- oberseitiges Erfassen des Teilbereichs eines bereitgestellten flächigen Halbzeuges in einer Aufnahmeposition mittels der in den Ansaugzustand gebrachten Greifeinheit,
- Transport des flächigen Halbzeugs mittels der Handhabungseinheit zu einem in einer Ablageposition befindlichen weiteren flächigen Halbzeug,
- Annähern der Unterseite des flächigen Halbzeuges an das weitere flächige Halbzeug,
- Anpressen des Teilbereichs des flächigen Halbzeuges auf einen weiteren Teilbereich des Weiteren flächigen Halbzeuges mittels der Transportvorrichtung,
- Aktivieren der Einrichtung mit der Quelle der hochenergetischen Strahlung,
- Ausbilden einer Fügezone zwischen den beiden Teilbereichen der flächigen Halbzeuge mittels der übertragenen hochenergetischen Strahlung,
- Abkühlen und/oder Erstarren der Fügezone unter Ausbildung einer Fügeverbindung zwischen den flächigen Halbzeugen,
- Lösen der gesamten Transportvorrichtung von dem flächigen Halbzeug.

Vorzugsweise ist das weitere flächige Halbzeug auf einem Werkstückträger angeordnet. Ein Werkstückträger kann insbesondere ein eine dreidimensionale Kontur vorgebender Werkstückträger oder ein Teil bzw. eine Hälfte eines Press- und/oder Umform- und/oder Spritzgusswerkzeuges sein.

Das flächige Halbzeug und/oder das weitere flächige Halbzeug kann ein Metallblech oder ein Halbzeug aus einem Kunststoffmaterial sein. Das Halbzeug aus einem Kunststoffmaterial kann insbesondere eine in eine Kunststoffmatrix eingebettete Faserverstärkung aufweisen. Die Faserverstärkung kann bereichsweise oder vollständig aus Endlosfasern bestehen, welche unidirektional ausgerichtet oder als Gewebe ausgebildet sein können. Die Kunststoffmatrix kann eine Matrix aus einem thermoplastischen Kunststoffmaterial oder aus einem duroplastischen Kunststoffmaterial umfassen. Die Faserverstärkung kann durch Glasfasern, Carbonfasern, Aramidfasern, Basaltfasern, Mineralfasern, Fasern aus nachwachsenden Rohstoffen, Metallfasern und/oder durch Polymerfasern gebildet sein. Das thermoplastische Kunststoffmaterial kann Polyamid (PA), insbesondere Polyamid 6 und Polyamid 6.6, Polypropylen (PP), Polyethylen (PE), POM (Polyoxymethylen), Polyphenylensulfid (PPS), Polyethersulfon (PES), Polyetheretherketon (PEEK), Polyetherimid (PEI), Polyethylenterephthalat (PET), vergleichbare Technische- oder Hochtemperatur-Kunststoffmaterialien oder Kombinationen der vorgenannten Kunststoffmaterialien umfassen. Ein duroplastisches Kunststoffmaterial kann Aminoplaste, Phenoplaste, Epoxidharze, vernetzte Polyacrylate, Polyurethane und weitere vernetzbare Polymere umfassen.

Im Folgenden wird die Erfindung anhand lediglich Ausführungsbeispiele darstellender Zeichnungen erläutert.

Es zeigen schematisch:
- Fig. 1: eine Querschnittsdarstellung einer erfindungsgemäßen Vorrichtung zum Greifen eines flächigen Halbzeuges,
- Fig. 2: eine Querschnittsdarstellung einer weiteren erfindungsgemäßen Vorrichtung zum Greifen eines flächigen Halbzeuges,
- Fig. 3: einen Ablauf des erfindungsgemäßen Verfahrens, sowie eine erfindungsgemäßen Transportvorrichtung.

In den Figuren werden gleiche oder funktionsgleiche Elemente mit den gleichen Bezugszeichen versehen.

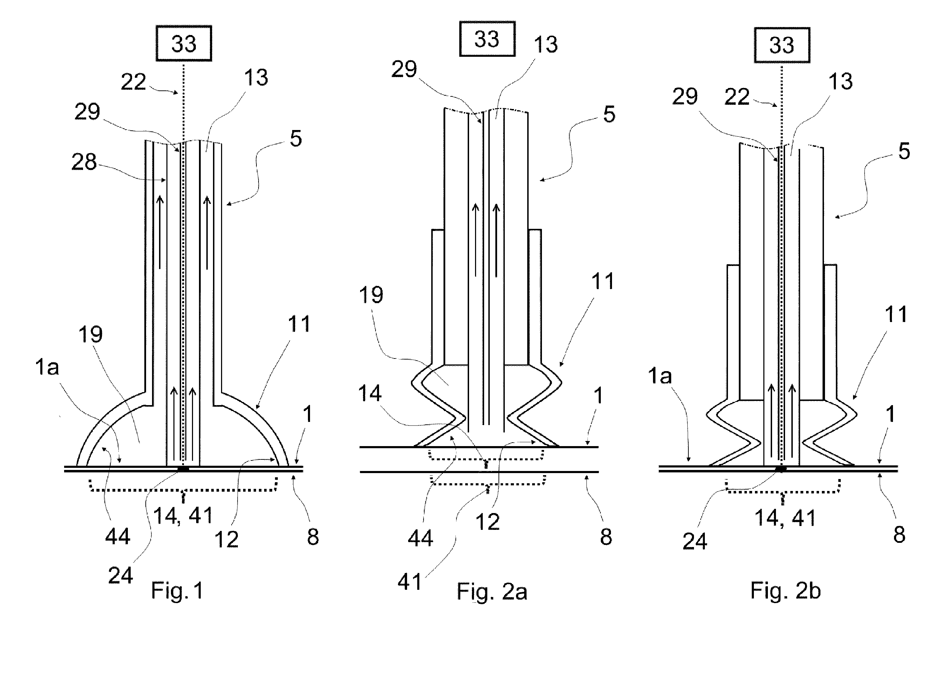

Die Fig. 1 zeigt eine erfindungsgemäße Vorrichtung zum Greifen eines flächigen Halbzeuges 1, insbesondere einem Halbzeug aus einem Kunststoffmaterial aufweisend eine Faserverstärkung, wie beispielsweise eine Fasermatte mit einer thermoplastischen Kunststoffmatrix. Die Vorrichtung zum Greifen eines flächigen Halbzeuges 1 umfasst eine Greifeinheit 5, wobei die Greifeinheit 5 eine Saugglocke 11 mit einem umlaufenden Rand 12 aufweist. Über eine Druckleitung 13 ist die Saugglocke 11 mittels Anlegen eines Unter- oder eines Überdruckes in einen Ansaugzustand oder einen Abstoßungszustand bringbar. Hierbei schließt der umlaufende Rand 12 im Ansaugzustand einen Teilbereich 14 des flächigen Halbzeuges 1 ein. Ferner ist eine Einrichtung 33 mit einer Quelle einer hochenergetischen Strahlung 22 vorgesehen. Diese Einrichtung 33 ist derart angeordnet, dass die Strahlung 22 innerhalb des umlaufenden Randes 12 auf den Teilbereich 14 des flächigen Halbzeuges 1 übertragbar ist. In dem in Fig. 1 dargestellten Ausführungsbeispiel einer erfindungsgemäßen Vorrichtung zum Greifen eines flächigen Halbzeuges 1 wird die hochenergetische Strahlung 22 durch die Druckleitung 13 übertragen. Innerhalb dieser Druckleitung 13 befindet sich ein Koaxialrohr 28, dessen innere Seele 29 zur Führung der hochenergetischen Strahlung 22 dient. In dem die Seele 29 umgebenden Bereich kann ebenfalls ein Unterdruck erzeugt werden, um insbesondere den bei einem mittels der hochenergetischen Strahlung 22 eingeleiteten Schweißvorgang entstehenden Schweißrauch sofort abzusaugen, damit dieser den Schweißprozess bzw. die hochenergetische Strahlung 22 nicht beeinflusst oder unterbricht. Die dem Teilbereich 14 zugewandte Oberfläche 44 der Saugglocke 11 ist aus einem die hochenergetische Strahlung 22 weitgehend reflektierenden Material gebildet. Hierdurch wird eine unerwünschte Erwärmung der Saugglocke 11 verringert. Der Rand 12 der Saugglocke 11 und der Endbereich des im Saugglockenraum 19 ausmündenden Koaxialrohrs 28 sind zudem so aufeinander abgestimmt, dass diese zugleich auf der Oberseite 1a des flächigen Halbzeuges 1 zum Aufliegen kommen. Hierdurch ist gewährleistet, dass das Koaxialrohr 28 eventuell austretende Streustrahlung der hochenergetischen Strahlung 22 vor einem Austritt in den Saugglockenraum 19 abschirmt. Gleichzeitig wird das flächige Halbzeug 1 im Bereich des Auftreffpunkts der hochenergetischen Strahlung 22, also der Fügezone 24, über das Koaxialrohr 28 unmittelbar angepresst, so dass nachteilige Spalte zwischen dem flächigen Halbzeug 1 und dem unterhalb des flächigen Halbzeuges 1 befindlichen weiteren flächigen Halbzeug 8 (bzw. zwischen dem Teilbereich 14 und dem weiteren Teilbereich 41 des weiteren flächigen Halbzeuges 8) minimiert werden, und somit eine optimale Schweißverbindung zwischen dem flächigen Halbzeug 1 und dem weiteren flächigen Halbzeug 8 realisiert werden kann.

Unterstützt wird dies durch die Saugglocke 11 selbst, da diese steif und unnachgiebig ausgebildet ist, so dass über die Saugglocke 11 eine Druckkraft auf das flächige Halbzeug 1 und das darunter befindliche weitere flächige Halbzeug übertragbar ist. Die Einrichtung 33 umfasst einen Laserstrahler, welcher eine Laserstrahlung als hochenergetische Strahlung 22 abgibt. Im Bereich der Saugglocke 11 ist ein hier nicht näher dargestellter, mit der Einrichtung 33 in Signalverbindung stehender Drucksensor vorgesehen, dessen Sensorsignal zur Freigabe der hochenergetische Strahlung 22 genutzt ist. Mittels des Drucksensors kann alternativ das Aufliegen des Endbereiches des Koaxialrohrs 28 detektiert und die hochenergetische Strahlung 22 erst dann freigeben werden, wenn sichergestellt ist, dass ein Aufliegen tatsächlich vorliegt. Die Einrichtung 33 mit der Quelle der hochenergetischen Strahlung 22 kann alternativ einen Laserstrahler und/oder einen Plasmastrahler und/oder einen Elektronenstrahler umfassen. Die hochenergetische Strahlung 22 kann daher ein Laserstrahl und/oder ein Elektronenstrahl und/oder ein Plasmastrahl sein.

In den Figuren 2a und 2b ist eine weitere Ausführungsform einer erfindungsgemäßen Vorrichtung zum Greifen eines flächigen Halbzeuges 1, insbesondere eines Halbzeug aus einem Kunststoffmaterial aufweisend eine Faserverstärkung, wie beispielsweise eine Fasermatte mit einer thermoplastischen Kunststoffmatrix, dargestellt. Die Vorrichtung umfasst eine Greifeinheit 5, welche eine Saugglocke 11 mit einem umlaufenden Rand 12 aufweist, welche über eine Druckleitung 13 mittels Anlegen eines Unter- oder eines Überdruckes in einen Ansaugzustand oder einen Abstoßungszustand bringbar ist und wobei der umlaufende Rand 12 im Ansaugzustand einen Teilbereich 14 des flächigen Halbzeuges 1 einschließt. Ferner ist eine Einrichtung 33 mit einer Quelle einer hochenergetischen Strahlung 22 vorgesehen, wobei diese Einrichtung 33 derart angeordnet ist, dass die Strahlung 22 innerhalb des umlaufenden Randes 12 auf den Teilbereich 14 des flächigen Halbzeuges 1 übertragbar ist. Die hochenergetische Strahlung 22 wird über eine Druckleitung 13 und eine innerhalb der Druckleitung 13 angeordnete Seele 29 geführt bzw. übertragen. Die Saugglocke 11 ist als elastische und nachgiebige Balgsaugglocke ausgebildet und, wie in Fig. 2b dargestellt, bei Kontakt des abzulegenden flächigen Halbzeuges 1 mit einem weiteren ortsfesten flächigen Halbzeug 8 soweit nachgiebig, dass die Druckleitung 13 mit ihrem Endbereich (Austrittsende) auf der Oberseite 1 a des flächigen Halbzeuges 1 aufliegt und im Bereich des Auftreffpunktes der hochenergetischen Strahlung 22, also im Bereich der auszubildenden Fügezone 24, das flächige Halbzeug 1 und das darunter befindliche weitere flächige Halbzeug 8 aufeinander presst.

Entsprechend werden nachteilige Spalte zwischen den beiden Halbzeugen 1 und 8 (bzw. zwischen dem Teilbereich 14 und dem weiteren Teilbereich 41 des weiteren flächigen Halbzeuges 8) minimiert, und die Qualität der Schweißverbindung erhöht. Im Bereich der Saugglocke 11 ist ein mit der Einrichtung 33 verbundener Drucksensor vorgesehen, dessen Sensorsignal zur Freigabe der hochenergetische Strahlung 22 nutzbar ist. Die dem Teilbereich 14 zugewandte Oberfläche der Saugglocke 11 ist mit einem die hochenergetische Strahlung 22 weitgehend reflektierenden Material beschichtet. Hierdurch wird eine unerwünschte Erwärmung der Saugglocke 11 verringert. Mittels des Drucksensors kann alternativ das Aufliegen des Endbereiches der Druckleitung 13 detektiert und die hochenergetische Strahlung 22 erst dann freigegeben werden, wenn sichergestellt ist, dass ein Aufliegen tatsächlich vorliegt. Die Einrichtung 33 mit der Quelle der hochenergetischen Strahlung 22 kann alternativ einen Laserstrahler und/oder einen Plasmastrahler und/oder einen Elektronenstrahler umfassen. Die hochenergetische Strahlung 22 kann daher ein Laserstrahl und/oder ein Elektronenstrahl und/oder ein Plasmastrahl sein.

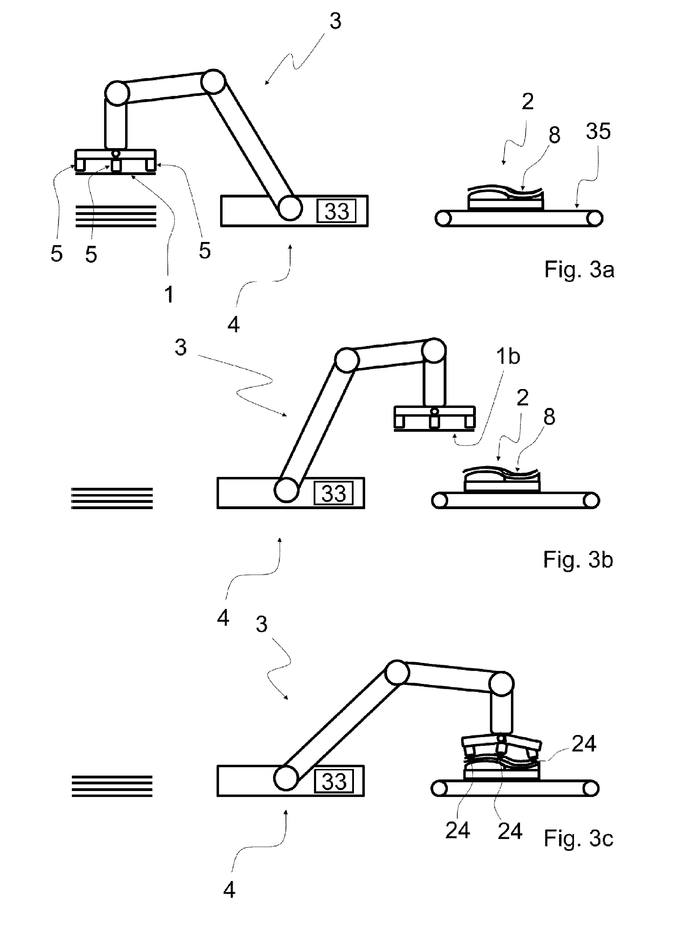

Die Figuren 3a bis 3c zeigen schematisch den Ablauf des erfindungsgemäßen Transportverfahrens mittels einer erfindungsgemäßen Transportvorrichtung 3. Die Transportvorrichtung 3 umfasst eine erfindungsgemäße Vorrichtung (vgl. auch Fig. 1 und Fig. 2) zum Greifen eines flächigen Halbzeuges 1 (insbesondere einem Halbzeug aus einem Kunststoffmaterial aufweisend eine Faserverstärkung, wie beispielsweise eine Fasermatte mit einer thermoplastischen Kunststoffmatrix) mit einer Greifeinheit 5, wobei die Greifeinheit 5 eine Saugglocke 11 mit einem umlaufenden Rand 12 aufweist, welche über mindestens eine Druckleitung 13 mittels Anlegen eines Unter- oder eines Überdrucks in einen Ansaugzustand oder einen Abstoßungszustand bringbar ist und, wobei der umlaufende Rand 12 im Ansaugzustand einen Teilbereich 14 des flächigen Halbzeuges 1 einschließt, wobei eine Einrichtung 33 mit einer Quelle einer hochenergetischen Strahlung 22 vorgesehen ist, wobei diese Einrichtung 33 derart angeordnet ist, dass die Strahlung 22 innerhalb des umlaufenden Randes 12 auf den Teilbereich 14 des flächigen Halbzeuges 1 übertragbar ist. Die Transportvorrichtung 3 umfasst ferner eine mit der Greifeinheit 5 verbundene räumlich bewegbare Handhabungseinheit 4. Die räumlich bewegbare Handhabungseinheit 4 ist in hierbei in Form eines Mehrachsen-Robotersystems ausgebildet. Das Transportverfahren umfasst die nachfolgend beschriebenen Schritte (vgl. Fig. 3a bis 3c). Zunächst erfolgt ein oberseitiges Erfassen von Teilbereichen 14 eines bereitgestellten flächigen Halbzeuges 1 in einer Aufnahmeposition mittels der in den Ansaugzustand gebrachten Greifeinheiten 5 (vgl. Fig. 3a).

Mittels der Handhabungseinheit 4 erfolgen ein Transport des flächigen Halbzeuges 1 zu einem in einer Ablageposition befindlichen weiteren flächigen Halbzeug 8 und ein Annähern der Unterseite 1 b des flächigen Halbzeuges 1 an das weitere flächige Halbzeug 8 (vgl. Fig. 3b). Anschließend erfolgt ein Anpressen des Teilbereichs 14 des flächigen Halbzeuges 1 auf einen weiteren Teilbereich 41 des weiteren flächigen Halbzeuges 8 mittels der Transportvorrichtung 3, das Aktivieren der Einrichtung 33 mit der Quelle der hochenergetischen Strahlung 22, das Ausbilden einer Fügezone 24 zwischen den beiden Teilbereichen 14, 41 der flächigen Halbzeuge 1 und 8 mittels der übertragenen hochenergetischen Strahlung 22 und das Abkühlen und/oder Erstarren der Fügezone 24 unter Ausbildung einer Fügeverbindung zwischen den flächigen Halbzeugen 1 und 8 (vgl. Fig. 3c). Das weitere flächige Halbzeug 8 ist dabei auf einem Werkstückträger 2 angeordnet. Der Werkstückträger 2 befindet sich auf einem Transportband 35 und kann nach erfolgter Ablage aller Fasermatten 1 und 8 (im Rahmen der Erfindung kann generell eine Mehrzahl von flächigen Halbzeugen 1 und 8 vorgesehen sein) auf dem Werkstückträger 2 von der Transportvorrichtung 3 entfernt und durch einen neuen Werkstückträger 2 ersetzt werden. Der Werkstückträger 2 dient zum Aufbau eines dreidimensionalen Vorformlings aus den flächigen Halbzeugen 1 und 8 (im Rahmen der Erfindung kann generell eine Mehrzahl von flächigen Halbzeugen 1 und 8 vorgesehen sein), wobei der Werkstückträger 2 die Grobkontur des Vorformlings vorgibt. Die flächigen Halbzeuge 1 und 8 sind als Fasermatten 1 mit einer Kunststoffmatix ausgebildet. Das Lösen der gesamten Transportvorrichtung 3 von dem flächigen Halbzeug 1 ist in Fig. 3 nicht mehr näher dargestellt. Das Lösen kann über ein Anblasen der Oberseite 1a der Fasermatte 1 mit Druckluft unterstützt werden. Hierzu eignet sich ebenfalls die Druckleitung 13 der erfindungsgemäßen Vorrichtung, die entsprechend Druckluft in den Saugglockenraum 19 leiten kann.

## Patentansprüche

1. Vorrichtung zum Greifen eines flächigen Halbzeuges (1), vorzugsweise einer Fasermatte (1), mit einer Greifeinheit (5), wobei die Greifeinheit (5) eine Saugglocke (11) mit einem umlaufenden Rand (12) aufweist, welche über mindestens eine Druckleitung (13) mittels Anlegen eines Unter- oder eines Überdrucks in einen Ansaugzustand oder einen Abstoßungszustand bringbar ist und, wobei der umlaufende Rand (12) im Ansaugzustand einen Teilbereich (14) des flächigen Halbzeuges (1) einschließt,
**dadurch gekennzeichnet, dass**
mindestens eine Einrichtung (33) mit einer Quelle einer hochenergetischen Strahlung (22) vorgesehen ist, wobei diese Einrichtung (33) derart angeordnet ist, dass die Strahlung (22) innerhalb des umlaufenden Randes (12) auf den Teilbereich (14) des flächigen Halbzeuges (1) übertragbar ist.

2. Vorrichtung nach Anspruch 1, **dadurch gekennzeichnet, dass** die hochenergetische Strahlung (22) über oder durch die Druckleitung (13) übertragbar ist.

3. Vorrichtung nach einem der Ansprüche 1 oder 2, **dadurch gekennzeichnet, dass** die Einrichtung (33) einen Laserstrahler und/oder einen Plasmastrahler und/oder einen Elektronenstrahler umfasst.

4. Vorrichtung nach einem der vorstehenden Ansprüche, **dadurch gekennzeichnet, dass** die Saugglocke (11) steif und unnachgiebig ausgebildet ist, so dass über die Saugglocke (11) eine Druckkraft auf das flächige Halbzeug (1) übertragbar ist.

5. Vorrichtung nach einem der vorstehenden Ansprüche 1 bis 3, **dadurch gekennzeichnet**, die Saugglocke (11) elastisch und nachgiebige ausgebildet ist, insbesondere als Balgsaugglocke ausgebildet ist.

6. Vorrichtung nach einem der vorstehenden Ansprüche, **dadurch gekennzeichnet, dass** im Bereich der Saugglocke (11) ein mit der Einrichtung (33) in Signalverbindung stehender Drucksensor vorgesehen ist, dessen Sensorsignal zur Freigabe der hochenergetische Strahlung (22) nutzbar ist.

7. Vorrichtung nach einem der vorstehenden Ansprüche, **dadurch gekennzeichnet, dass** zumindest die dem Teilbereich (14) zugewandte Oberfläche (44) der Saugglocke (11) aus einem die hochenergetische Strahlung (22) weitgehend reflektierenden Material gebildet oder mit diesem beschichtet ist.

8. Vorrichtung nach einem der vorstehenden Ansprüche, **dadurch gekennzeichnet, dass** das flächige Halbzeug (1) ein Metallblech oder ein Halbzeug aus einem Kunststoffmaterial ist, insbesondere ein Halbzeug aus einem Kunststoffmaterial aufweisend eine Faserverstärkung.

9. Transportvorrichtung umfassend eine Vorrichtung nach einem der Ansprüche 1 bis 8 und mindestens eine mit der Greifeinheit (5) verbundene räumlich bewegbare Handhabungseinheit (4).

10. Transportverfahren zur Ablage und gleichzeitigen Lagefixierung von flächigen Halbzeugen (1, 8) unter Verwendung einer Transportvorrichtung, wobei die Transportvorrichtung aufweist:
- mindestens eine Greifeinheit (5), wobei die Greifeinheit (5) eine Saugglocke (11) mit einem umlaufenden Rand (12) umfasst, welche über mindestens eine Druckleitung (13) mittels Anlegen eines Unter- oder eines Überdrucks in einen Ansaugzustand oder einen Abstoßungszustand bringbar ist und, wobei der umlaufende Rand (12) im Ansaugzustand einen Teilbereich (14) eines flächigen Halbzeuges (1) einschließt,
- mindestens eine Einrichtung (33) mit einer Quelle einer hochenergetischen Strahlung (22), wobei diese Einrichtung (33) derart angeordnet ist, dass die Strahlung (22) innerhalb des umlaufenden Randes (12) auf den Teilbereich (14) des flächigen Halbzeuges (1) übertragbar ist, und
- mindestens eine mit der Greifeinheit (5) verbundene räumlich bewegbare Handhabungseinheit (4), umfassend die folgenden Schritte:
- Oberseitiges Erfassen des Teilbereichs (14) eines bereitgestellten flächigen Halbzeuges (1) in einer Aufnahmeposition mittels der in den Ansaugzustand gebrachten Greifeinheit (5),
- Transport des flächigen Halbzeuges (1) mittels der Handhabungseinheit (4) zu einem in einer Ablageposition befindlichen weiteren flächigen Halbzeug (8),
- Annähern der Unterseite (1 b) des flächigen Halbzeuges (1) an das weitere flächige Halbzeug (8),
- Anpressen des Teilbereichs (14) des flächigen Halbzeuges (1) auf einen weiteren Teilbereich (41) des Weiteren flächigen Halbzeuges (8) mittels der Transportvorrichtung (7),
- Aktivieren der Einrichtung (33) mit der Quelle der hochenergetischen Strahlung (22),
- Ausbilden einer Fügezone (24) zwischen den beiden Teilbereichen (14, 41) der flächigen Halbzeuge (1, 8) mittels der übertragenen hochenergetischen Strahlung (22),
- Abkühlen und/oder Erstarren der Fügezone (24) unter Ausbildung einer Fügeverbindung zwischen den flächigen Halbzeugen (1, 8),
- Lösen der gesamten Transportvorrichtung (3) von dem flächigen Halbzeug (1).

11. Transportverfahren nach Anspruch 10, **dadurch gekennzeichnet, dass** das weitere flächige Halbzeug (8) auf einem Werkstückträger (2) angeordnet ist.

12. Transportverfahren nach einem der Ansprüche 10 oder 11, **dadurch gekennzeichnet, dass** das flächige Halbzeug (1) und/oder das weitere flächige Halbzeug (8) ein Metallblech oder ein Halbzeug aus einem Kunststoffmaterial ist, insbesondere ein Halbzeug aus einem Kunststoffmaterial aufweisend eine Faserverstärkung.
